Europäisches Patentamt

**European Patent Office**

Office européen des brevets

(11) Publication number: **0 017 402**
**A1**

## (12) EUROPEAN PATENT APPLICATION

(21) Application number: **80300879.6**

(22) Date of filing: **21.03.80**

(51) Int. Cl.³: **B 60 D 1/14**
**B 60 P 3/12**

(30) Priority: **02.04.79 GB 7911417**

(43) Date of publication of application:
**15.10.80 Bulletin 80/21**

(84) Designated Contracting States:
**AT BE CH DE FR GB IT LU NL SE**

(71) Applicant: **Creaser, William Robert**
**"South View" Howden Road**
**Eastrington, Goole North Humberside DN14 7PL(GB)**

(72) Inventor: **Creaser, William Robert**
**"South View" Howden Road**
**Eastrington, Goole North Humberside DN14 7PL(GB)**

(74) Representative: **Couch, Bernhard Charles et al,**
**W.P. THOMPSON & CO. Coopers Building, Church Street**
**Liverpool L1 3AB(GB)**

(54) Improvements in or relating to vehicle hitches.

(57) A vehicle hitch for enabling the front end of a vehicle (10) to be raised by a recovery vehicle (32) without damaging the bodywork of the vehicle (10) comprises a pair of spaced, parallel lifting beams (18) each having a seat assembly (40) for engaging the vehicle axle (42), quick release means such as a chain for fixing the rear end of each beam (18) to the vehicle frame (12) and similar quick release means for attaching the towing ends of the beams (18) to the towing hitch and/or lifting assembly (38) of the recovery vehicle.

./...

EP 0 017 402 A1

Croydon Printing Company Ltd.

_Fig 1._

DESCRIPTION

"IMPROVEMENTS IN OR RELATING TO VEHICLE HITCHES".

This invention concerns vehicle hitches or towing assemblies and relates more particularly, although not exclusively, to such hitches for use in connection with heavy vehicles such as passenger coaches.

It is common practice in the construction of passenger coaches to fabricate much of the bodywork from materials such as glass fibre reinforced plastics, which have good weather-resistant properties but which, at least when in the form of relatively thin panels or the like, are mechanically somewhat fragile. Having regard, therefore, to the substantial overhang of the vehicle body beyond its wheel axles, a problem usually arises in the case of vehicle failure, when difficulty can be experienced in attaching towing means to a suitable part of the vehicle, without damaging the fragile bodywork.

According to the present invention, a vehicle hitch intended to overcome this problem comprises a cradle which, intermediate its ends, has axle receiving and locating means engageable with a vehicle axle to provide a seat therefor, and a towing connection at a first one of the cradle ends, the other cradle end having means for releasable connection to the vehicle chassis or frame.

When the towing end of the cradle is lifted, therefore, as by a recovery vehicle, the axle seat provided by the cradle co-operates with the releasable connection securing said other cradle end to the chassis or frame to define a position of said cradle below and substantially parallel to the chassis or frame and spaced from the vehicle bodywork.

The cradle may take the form of a framework or of a platform of a size and strength appropriate to the weights of vehicles with which it is intended to be used and if desired, it may be fitted with small wheels or with skids to facilitate handling and manoeuvering. In

- 2 -

one convenient form, the cradle is a framework which is capable of being dismantled when not in use for ease of transportation, and comprises a pair of rolled steel sections such as I-beams constituting lifting members adapted adjacent the towing end of the cradle to receive a detachable spacer member of adjustable length.

Releasable fastening means such as chains may, if desired, be passed around the vehicle axle and main frame members to maintain the axle secured in its seat on the cradle, means being provided on the cradle for maintaining the chains secured thereto. In place of chains, however, the cradle may carry mechanically or hydraulically operated jaws or clamps for engaging the axle and the vehicle frame.

In another embodiment of the invention, the cradle comprises a pair of independent lifting members, such as I-beams, in which each lifting member is provided with a saddle assembly presenting a seat for the vehicle axle and wherein the spacing at the front end of the cradle is established not by a spacer member incorporated in the cradle but by a towing component such as a hitch bar which is part of the towing equipment of a recovery vehicle. The saddle assembly, which is preferably adjustable lengthwise along the lifting member, is conveniently constructed to provide a close fit for the vehicle axle when the saddle assembly has been positioned at an appropriate location on the lifting member, so that fastening means such as chains or clamps need not necessarily be provided to secure the axle in its seat.

The invention will be described further, by way of example, with reference to the accompanying drawings, in which:

Fig.1 is a diagrammatic side elevation of a passenger coach having its front end supported by a vehicle hitch embodying the invention;

Fig.2 is a diagrammatic plan view, to an enlarged scale, of the front end of the coach engaged by the vehicle hitch;

Fig.3 is a fragmentary side elevation of an intermediate region of the cradle, showing an axle cup thereon,

Fig.4 is a fragmentary elevation of the other cradle end secured to a vehicle frame member,

Fig.5 is an elevation, similar to that of Fig.1, of the front portion of a passenger coach which is supported by another embodiment of the invention,

Fig.6 is a side elevation of a lifting member used in the cradle employed in Fig.5,

Fig.7 is a plan view of the lifting member shown in Fig.6,

Fig.8 is an end view of an adjustable saddle assembly,

Fig.9 is a detail of the rear end of the lifting member,

Fig.10 is a detail in side elevation of the front end of the lifting member, and

Fig.11 is a section taken on the line XI-XI of Fig.10.

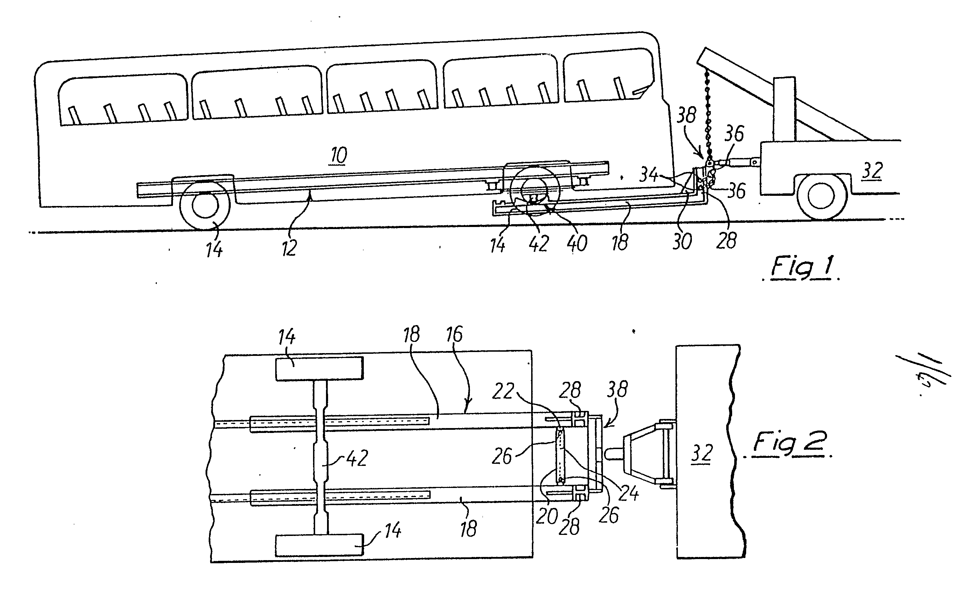

One widely used construction of passenger coach is shown in Fig.1 and includes a body 10 mounted on a frame 12 which in turn is resiliently supported by road wheels 14. Very often, the body 10 is made of a glass fibre reinforced resin and due to the body overhang beyond the road wheels 14, makes it difficult for conventional tow hitches to be secured to the frame 12 without damaging the body.

As seen for example in Fig.2, therefore, the invention provides a hitch comprising a cradle generally designated 16 and including a pair of longitudinally directed beams 18 spaced apart at one end by a detachable spacer bar 20. The spacer bar 20 has telescopic ends 22 and a series of holes 24 at each end region, whereby the telescopic ends 22 can be adjusted to impart a chosen length to the spacer bar and hence a desired spacing between the beams 18. Pins 26 passed through the holes 24 and through co-operating holes (not shown) in the telescopic ends 22 serve to maintain the ends 22 in their adjusted positions.

At their right-hand ends as viewed in the drawings, the beams 18 have welded to them, upright posts 28 which provide a towing connection to a recovery vehicle, as described immediately below.   Between each post 28 and its associated beam 18 is welded a strengthening web or fillet 30.

In the exemplary form illustrated in the drawings, the vehicle hitch employs chains for releasably connecting the cradle to a recovery vehicle, such as that designated 32 in Figs. 1 and 2, and the towing connection provided by those posts accordingly includes keyhole slots 34 in which chain ends may be detachably secured.  Chains 36 thus secured are passed over the lifting hook assembly 38 of the recovery vehicle and engage with the hooks thereof to provide both a lifting and a towing attachment to the cradle.

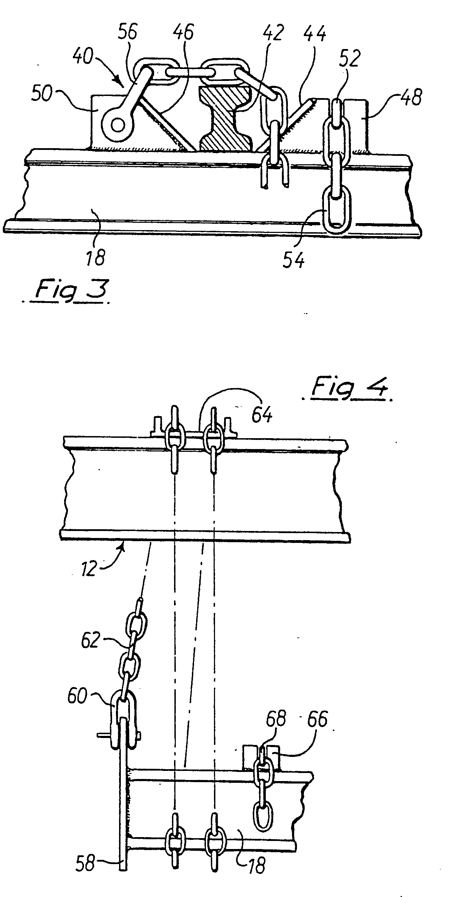

Referring now to Fig.3, each beam 18 of the cradle 16 is provided intermediate its ends with an axle cup 40 for receiving and locating the wheel axle 42 when the cradle is passed under the coach.   The axle cup 40 is defined by the upper surface of the beam 18 and by a pair of oppositely inclined plates 44 and 46 which are spaced apart from one another in a lengthwise direction along the beam.   The plate 44 is supported by a pair of upstanding webs 48 welded to and transversely spaced on the beam 18 and the plate 46 is supported by similar webs 50, only one each of the webs 48 and 50 being visible in Fig.3.   The webs 48 have slots 52 formed in their upper edges to receive and lock an end of a chain 54, the chain being passed around the beam 18, over the axle 42 and terminating at its other end in a shackle 56 which is hinged to the webs 50.

At the end of the cradle 16 remote from the towing end, each beam 18 terminates in an end plate 58, a free upper edge of which is fitted with a shackle 60 to which is secured a chain 62.   When the cradle has been positioned beneath the coach, the chain 62 is passed around the vehicle frame 12, with the interposition of a load spreading plate 64 if desired, and around the end region of the beam 18, and is then locked in a slot 68 provided in a lug 66 welded to the beam 18.

In use, the vehicle hitch, mounted on skids or on small wheels if desired, is offered to the coach 10 and the spacing between the beams 18, the latter having been aligned with the main frame members of the vehicle frame 12, is set by means of the spacer bar 20. The cradle is manoeuvred to register the axle cup 40 with the vehicle axle 42 and the chain 54 is engaged and locked over the axle. The chain 62 is similarly engaged over the vehicle frame 12 and locked in the lug 66 and the towing connection to the recovery vehicle 32 is effected by means of the chains 36 and hook assembly 38. When lift is applied to the hook assembly 38, any tendency of the cradle to pivot about the axle 42 is prevented by the chain 62 which under lift conditions, acts to maintain the cradle parallel to the vehicle frame 12. Appropriate spacing between the cradle and the vehicle bodywork is established by the engagement of the cradle with the axle 42 and serves to avoid damage to the bodywork.

It will, of course, be appreciated that various modifications may be made within the scope of the invention. Thus, for example, the cradle may be in the form of a platform rather than a framework as described. Again, in place of the chains 54 and 62, the cradle may carry clamps or the like for engaging the axle 42 and the vehicle frame 12.

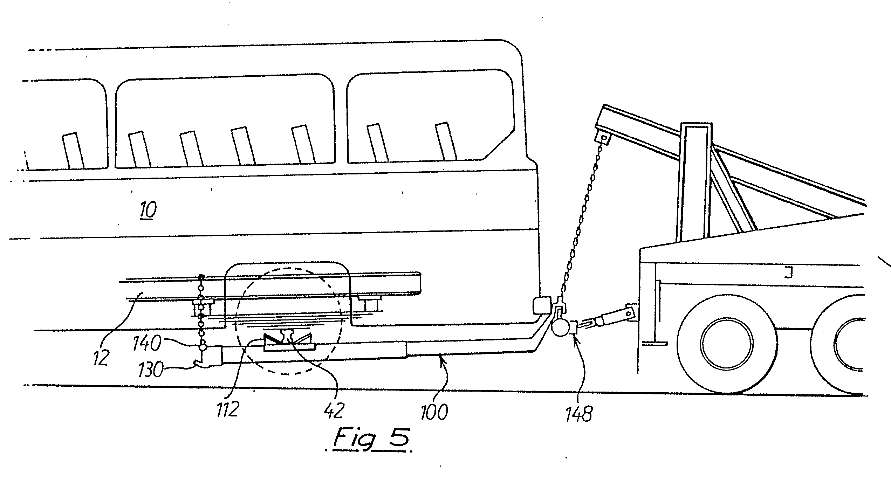

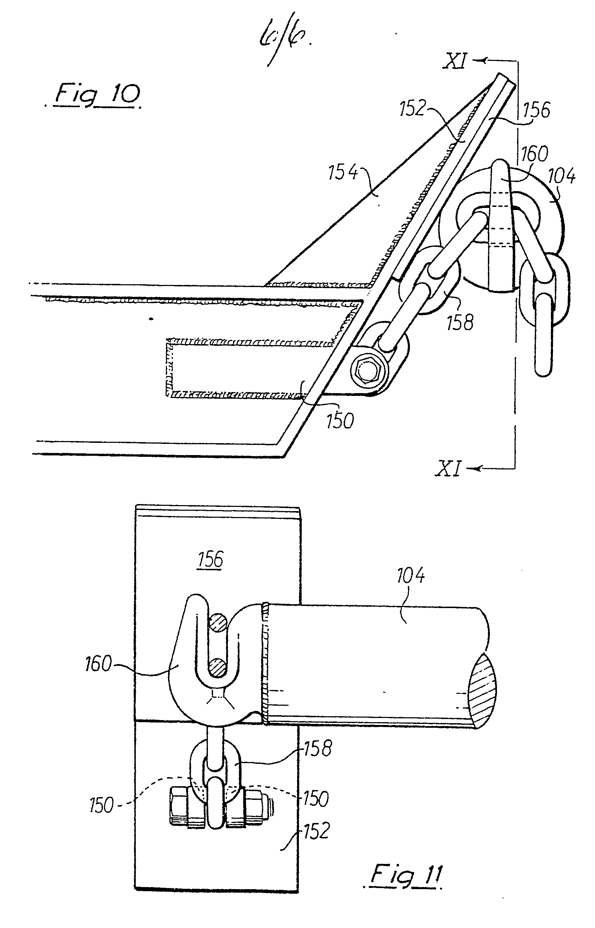

In the embodiment of the invention illustrated in Figs. 5 to 11 inclusive, the cradle takes the form of a pair of independent lifting members 100 which are positioned in transversely spaced relation beneath the vehicle 10 which is to be lifted, with the front end spacing of the lifting members 100 being determined by the length of the hitch bar 104 (Figs. 10 and 11) provided on the recovery vehicle 102 which is used. Since the parameters of the frame and the axle spacing may vary from coach to coach, the lifting members may readily adopt a non-parallel relationship in use in order to accommodate such variations.

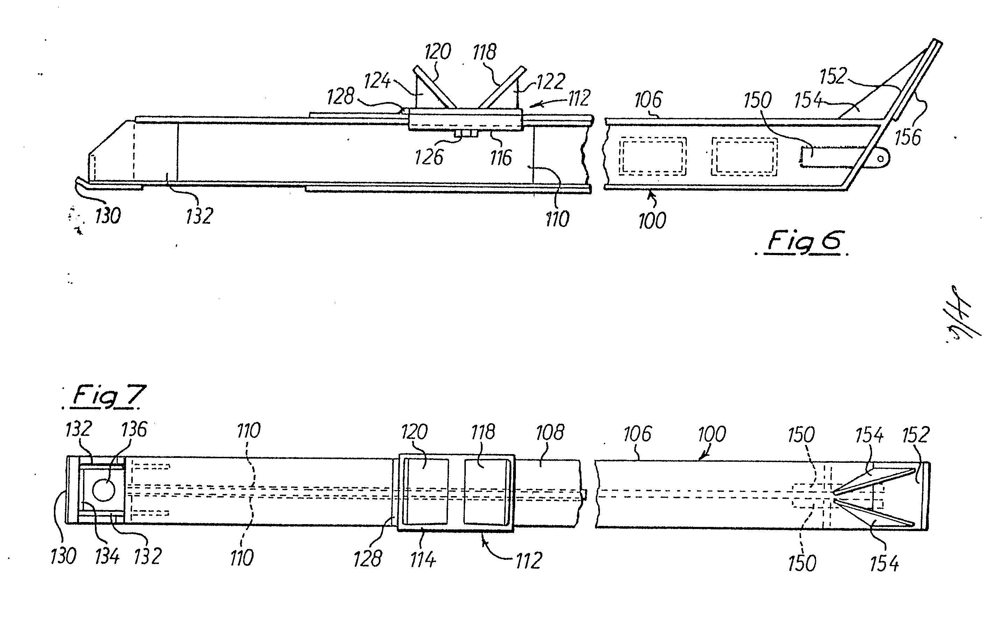

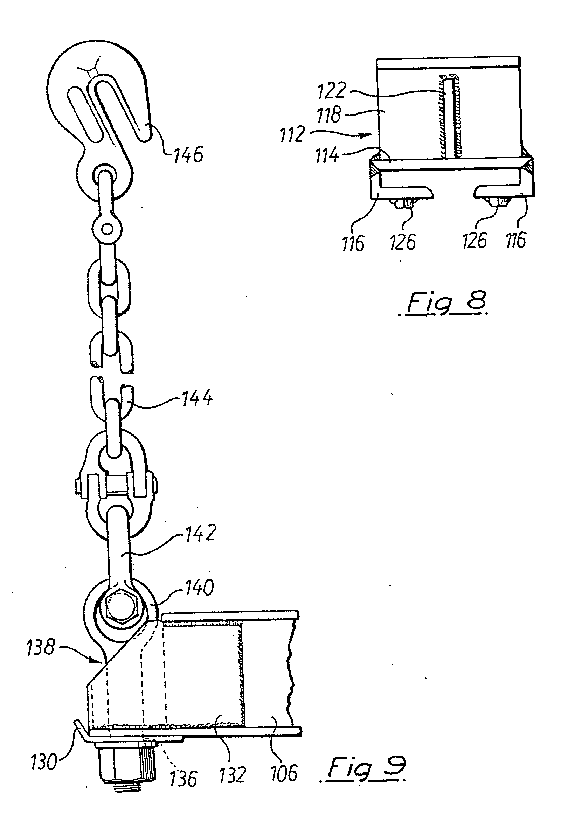

As shown in Figs. 6 and 7, each lifting member 100 comprises an elongate, I-section beam 106, approximately the rear half of which is stiffened by top and bottom flange plates 108 and by side web plates 110, which serve to reinforce the maximum load bearing region of the beam. On the stiffened upper flange of the beam 106 is mounted a slidable saddle assembly 112 (Fig.8) including a carrier 114 retained on the top flange of the beam by in-turned guides 116 secured to its lateral edges. The carrier 114 has welded to it, a pair of oppositely inclined seat plates 118 and 120 which are supported by respective webs 122 and 124, the two inclined plates being slightly spaced apart along the length of the beam and co-operating to define a seat for receiving and locating the coach wheel axle 42. Each guide 116 is apertured and has a threaded nut 126 welded to it in register with the aperture to enable the saddle assembly 112 to be locked in a desired position on the beam 106. A stop bar 128 is welded transversely across the top stiffening flange 108 to limit movement of the saddle assembly in a rearward direction.

To facilitate manoeuvrability of the lifting member, the undersurface of the bottom flange of the beam 106 is provided at its rear end with a skid plate 130, the beam being cut to enable the bottom flange and skid plate to extend longitudinally beyond the top flange of the beam. Support for the extended bottom flange region is provided by a pair of transversely spaced, parallel rear web elements 132 mounted between the top and bottom flanges of the beam and having a transverse stiffener 134 secured

between their free ends. The skid plate 130 and the bottom flange region to which it is secured are apertured at 136 (Fig.9) to receive the threaded end of an eyebolt 138, in the eye 140 of which is engaged a shackle 142 attached to one end of a chain 144. The other end of chain 144 terminates in a grab hook 146.

A connection for the towing hitch, generally designated 148, of the recovery vehicle 102 is provided by welding an attachment plate 150 to each side of the web of the beam 106 at its forward end. The forward end of the beam is cut so that the top flange continues beyond the bottom flange and a front end plate 152, which is consequently forwardly inclined, is welded to the cut end, with the attachment plates 150 projecting through it. The front plate 152 is braced by stiffening webs 154 welded between it and the top flange of the beam 106 and at its front face is protected by a pad 156, which may be resilient. One end of a chain 158 is secured between the transversely spaced attachment plates 150 (Fig.11), the other end of the chain being engageable in the slot of a grab hook 160 welded to the end of the hitch bar 104, which forms a part of the towing hitch 148.

The operation of this embodiment of the invention is similar to that already described in connection with Figs. 1 to 4, except that the lifting members are manoeuvred independently and that there is no associated spacer bar connecting them. Thus, each lifting member 100 is moved about on its skid plate 130 to position it beneath a main frame member of a coach which is to be lifted, with the forward ends of the lifting members extending satisfactorily beyond the front end of the coach and with the rear section of the lifting member conveniently situated with respect to a front wheel axle 42. The saddle assembly 112 is then moved into approximate alignment with the axle 42, the eyebolt 138 is passed through the beam member bottom flange and skid plate 130 and secured, the chain 144 is passed around the vehicle frame 12 and secured by engaging the grab hook 146 with one of the the chain links and the chain 158 is attached to the grab hook 160 of the recovery vehicle 102. The forward ends of two lifting members thus arranged are preliminarily raised by the recovery vehicle to bring their saddle assemblies 112 close to the respective wheel axle 42, the saddle assemblies are adjusted along the beams 106 to register accurately with the wheel axles, and are then clamped in position by means of bolts (not shown) engaged in the fixed nuts 126. Final lifting of the coach is then carried out by the recovery vehicle preparatory to the intended towing operation, with the wheel axles 42 sealed and located in the saddle assemblies 112 and with the rear ends of the lifting members securely held by the chains 144 passed around the vehicle frame 12.

<u>CLAIMS.</u>

1. A vehicle hitch member comprising an elongate beam, seat means intermediate the ends of said beam for engaging beneath an axle of a vehicle to be lifted and towed, one of said ends having a towing connection, for attachment to a recovery vehicle, and releasable fastening means at the other end of said beam for securing said other end in fixed relation to the frame of the vehicle to be lifted.

2. A vehicle hitch member as claimed in claim 1, in which said seat means is presented in a saddle assembly which is adjustable lengthwise along the beam.

3. A vehicle hitch member as claimed in claim 2, in which said beam is an I-section beam and said saddle assembly comprises a carrier plate retained on an upper flange of said beam by lateral guide means co-operating with said flange and wherein a pair of longitudinally spaced seat plates which are inclined in opposite directions with respect to the main axis of the beam are mounted on said carrier plate to define an axle-receiving seat thereon.

4. A vehicle hitch member as claimed in any one of claims 1 to 3, in which the releasable fastening means at said other end of said beam includes a chain secured to said other end of said beam to enable a free end of said chain to pass around the frame of the vehicle to be lifted, and means for securing said free end to or in fixed relation to said beam after it has been engaged around said frame.

5. A vehicle hitch member as claimed in any one of the preceding claims, in which the towing connection comprises one or more chains secured to said one end of said beam and detachably engageable by a towing hitch of said recovery vehicle.

6. A vehicle hitch comprising a pair of hitch members as claimed in any one of the preceding claims and arranged in transversely spaced, parallel relation to constitute a cradle for receiving an axle or axle portion of the vehicle to be lifted.

7.   A vehicle hitch comprising a cradle which, intermediate its ends, has axle receiving and locating means engageable with a vehicle axle to provide a seat therefor, and a towing connection at a first one of the cradle ends, the other cradle end having means for releasable connection to the vehicle frame or chassis.

8.   A vehicle hitch as claimed in claim 7, in which said cradle comprises a pair of spaced parallel, elongate beams each having axle receiving and locating means intermediate its ends and a spacer member positioned between said beams adjacent the towing connection ends thereof.

9.   A vehicle hitch as claimed in claim 8, in which said spacer member is detachably connected between said beams.

10.   A vehicle hitch as claimed in claim 8 or claim 9, in which said spacer member is of adjustable length.

11.   A vehicle hitch as claimed in any one of claims 7 to 10, further comprising releasable fastening means for securing said axle receiving and locating means to said axle.

12.   Vehicle hitches and hitch members therefor, constructed and arranged substantially as hereinbefore described, with reference to and as illustrated in the accompanying drawings.

Fig_1.

Fig 2.

1/2.

0017402

Fig 3

Fig 4

Fig 5

_Fig 6_

_Fig 7_

0017402

_Fig 8_

_Fig 9_

0017402

6/6.

*Fig 10*

154

152

156

160

104

158

150

XI

XI

156

104

160

158

150

150

152

*Fig 11*

# EUROPEAN SEARCH REPORT

European Patent Office

Application number

EP 80 30 0879

## DOCUMENTS CONSIDERED TO·BE RELEVANT

| Category | Citation of document with indication, where appropriate, of relevant passages | Relevant to claim |
|---|---|---|
| X | FR - A - 971 036 (E. THEZEE) <br> * claims; fig. * | 1,2, 4-8, 11,12 |
| | -- | |
| | US - A - 1 657 655 (ASHTON) <br> * page 2, lines 66 to 76; fig. * | 1,5-8, 12 |
| | -- | |
| A | US - A - 3 831 980 (KNIFF) | |
| | -- | |
| A | US - A - 3 494 635 (DENNY) | |
| | -- | |
| A | DE - C - 939 672 (DAIMLER–BENZ) | |
| | ----- | |

### CLASSIFICATION OF THE APPLICATION (Int. Cl.³)

B 60 D 1/14
B 60 P 3/12

### TECHNICAL FIELDS SEARCHED (Int.Cl.³)

B 60 D 1/00
B 60 P 3/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 07-05-1980 | LEITZ |

EPO Form 1503.1  06.78